# NEUE EUROPÄISCHE PATENTSCHRIFT

(11) **EP 0 661 025 B2**
(45) Veröffentlichungstag und Bekanntmachung des Hinweises auf die Entscheidung über den Einspruch: **19.11.2003**
(45) Hinweis auf die Patenterteilung: 14.10.1998
(21) Anmeldenummer: 94119011.8
(22) Anmeldetag: 02.12.1994
(51) Int. Cl.: A61C 15/00, A61C 15/04

(54) **Reinigungswerkzeug für die Zähne**
Cleaning tool for teeth
Instrument de nettoyage pour les dents

(30) Priorität: 23.12.1993 DE 4344110; 23.02.1994 DE 4405857
(43) Veröffentlichungstag der Anmeldung: 05.07.1995
(73) Patentinhaber: Braun GmbH, Kronberg (DE)
(72) Erfinder: Boland, Bernhard, D-60385 Frankfurt (DE); Haczek, Werner, D-65510 Idstein (DE)

(56) Entgegenhaltungen:
- EP-A- 0 354 352
- DE-A- 3 736 308
- DE-A- 4 223 195
- DE-A- 4 226 659
- DE-A- 4 309 078
- DE-C- 1 766 651
- FR-A- 429 447
- US-A- 4 064 883
- US-A- 4 347 839
- US-A- 4 577 649
- US-A- 4 922 936
- US-A- 5 050 625
- US-A- 5 071 348

## Beschreibung

Die Erfindung betrifft ein Reinigungswerkzeug für Zähne gemäß dem Oberbegriff von Anspruch 1.

Ein derartiges, elektromotorisch angetriebenes Reinigungswerkzeug ist bereits aus der DE-A-4 226 659 bekannt. Auch die DE-C-1766651 offenbart ein weiteres elektromotorisch angetriebenes, in Oszillation in Richtung der Längsachse des Reinigungswerkzeuges versetzbares Reinigungswerkzeug.

Ein weiteres Reinigungsgerät ist aus der EP 0 354 352 A1 bekannt. Dieses Reinigungswerkzeug weist einen dünnen Stiel auf, der mit einer abrasiven Schicht zum Abtragen von Zahnbelag versehen ist. Der Stiel ist mittels einer Halterung an einem Handgriff festlegbar. Ein Problem dieses bekannten Reinigungswerkzeuges besteht darin, daß eine wirksame Reinigung der Zahnzwischenräume nur dann möglich ist, wenn diese in ihren Abmessungen etwa dem Durchmesser des Reinigungswerkzeuges entsprechen. Weiterhin ist dieses manuell geführte und betätigte Reinigungswerkzeug im Hinblick auf das Einführen in die Zahnzwischenräume und auch im Hinblick auf die Notwendigkeit, das Reinigungswerkzeug durch die Hand des Benutzers in Bewegung zu setzen, nur schwer und umständlich zu handhaben.

Aufgabe der Erfindung ist es, ein Reinigungswerkzeug zu schaffen, mit dessen Hilfe eine effektive Reinigung der Zahnzwischenräume, und eine leichte Handhabung gewährleistet ist.

Diese Aufgabe wird nach der Erfindung im wesentlichen dadurch gelöst, daß der freie Endabschnitt des Schaftes eine etwa sichelartige Durchbiegung aufweist.

Das Reinigungswerkzeug nach der Erfindung weist den Vorteil einer effektiven Zahnreinigung und einer leichten Handhabbarkeit auf. Dadurch, daß das Reinigungswerkzeug mit einem elektromotorischen Antrieb koppelbar und in Rotation bzw. Oszillation um eine Schaftmittellängsachse versetzbar ist, ist ein einfaches Einfädeln des Reinigungswerkzeuges in die Zahnzwischenräume gewährleistet, wobei aufgrund der motorisch veranlaßten Bewegung des Reinigungswerkzeuges eine problemlose, ermüdungsfreie und effektive Reinigung der Zähne gewährleistet ist. Dadurch, daß der freie Endabschnitt des Schaftes aus flexiblem Material besteht und eine etwa sichelartige Durchbiegung aufweist, paßt sich das Reinigungswerkzeug selbsttätig an die individuelle Größe der Zahnzwischenräume an. Bei der Rotation bzw. Oszillation des Reinigungswerkzeuges um die Schaftmittellängsachse beschreibt die etwa sichelartige Durchbiegung eine in etwa faß- oder tonnenförmige Mantelfläche, wobei der Durchmesser dieser Mantelfläche sich aufgrund der Flexibilität des Endabschnittes des Schaftes den individuellen Abmessungen der einzelnen Zahnzwischenräume selbsttätig anpaßt. Auf jeden Fall können mit dem erfindungsgemäßen Reinigungswerkzeug Zahnzwischenräume unterschiedlicher Abmessungen effektiv gereinigt werden, da der freie Endabschnitt im Bereich der etwa sichelartigen Durchbiegung auch bei unterschiedlich breiten Zahnzwischenräumen mit den Zahnseitenflächen in Kontakt kommt.

Von Vorteil schließt sich kopfseitig an die Durchbiegung des Endabschnittes ein im wesentlichen gerader Einführungsabschnitt an, dessen Schaftmittellängsachse mit der Rotationsachse im wesentlichen identisch ist. Hierdurch wird das Einführen des Reinigungswerkzeuges in die Zahnzwischenräume erheblich vereinfacht.

Von Vorteil steht die Länge der Durchbiegung zur Länge des Endabschnitts im Verhältnis von etwa 1:2. Durch diese Abmessungen wird ein günstiger Kompromiß zwischen optimaler Einführung des Reinigungswerkzeuges und effektiver Zahnreinigung erzielt.

Nach einer vorteilhaften Ausgestaltung weist der freie Endabschnitt zwei benachbarte, eine Öse bildende Durchbiegungen auf. Durch eine derartige, flexible Reinigungsöse kann das Reinigungswerkzeug sich seibsttatig an verschieden große Zahnzwischenräume anpassen, wobei durch die Anordnung von zwei benachbarten Durchbiegungen zum einen ein Massenausgleich geschaffen wird, so daß das Reinigungswerkzeug auch unter dem Einfluß einer hohen Rotations- bzw. Oszillationsgeschwindigkeit nicht wesentlich aufgrund von Unwuchten ausgelenkt wird. Zum anderen wird die Reinigungswirkung des Reinigungswerkzeuges durch den Einsatz zweier Durchbiegungen in Einzelfällen verbessert. Auch die Reinigungsöse paßt sich aufgrund der Flexibilität des Endabschnittes den unterschiedlichen Abmessungen der Zahnzwischenräume selbsttätig an. Bei dieser wie auch den vorher erwähnten Ausführungsformen ist natürlich auch eine Reinigung der Zahnaußen- bzw. -innenflächen möglich, indem das Reinigungswerkzeug beispielsweise tangential an diese Flächen herangeführt wird.

Von Vorteil besteht der freie Endabschnitt aus polyesterhaltigem Kunststoff, insbesondere Hytrel. Derartige Kunststoffe weisen eine hohe Dauerbiegewechselfestigkeit auf, wodurch eine hohe und gleichbleibende Federwirkung der Durchbiegung bzw. der Öse erreicht wird. Des weiteren ist auch eine Umbiegung des gesamten Reinigungsschaftes und ein rotatorischer bzw. oszillatorischer Antrieb des Reinigungsschaftes um die Schaftmittellängsachse aufgrund dieser Materialwahl möglich.

Von Vorteil ist zwischen dem Endabschnitt und dem Halteabschnitt ein Zwischenabschnitt mit einer oder mehreren balligen Verdickungen angeordnet. Durch diese balligen Verdickungen in dem Zwischenabschnitt wird die Torsionsfestigkeit des Schaftes des Reinigungswerkzeuges erhöht, was zu einer Verlängerung der Lebensdauer des Reinigungswerkzeuges führt.

Nach einem Ausführungsbeispiel der Erfindung weist der freie Endabschnitt wenigstens eine, im wesentlichen parallel zur Schaftmittellängsachse verlaufende, schneidenförmige Reinigungskante auf. Mit Hilfe dieser Reinigungskante wird die Ablösung, insbesondere von festsitzendem Zahnbelag, wie z. B. Plaque, weiter verbessert.

Eine vorteilhafte Ausführungsform des Reinigungswerkzeuges besteht darin, daß der freie Endabschnitt eine Länge von etwa 5 mm, eine Dicke von etwa 0,3 mm und eine Durchbiegung von etwa 0,5 mm bzw. eine Öse mit einer lichten Weite von etwa 1 mm aufweist.

Nach einer besonders vorteilhaften, eigenständigen Ausgestaltung der Erfindung ist das Reinigungswerkzeug von einer Aufnahmehülse umfaßt. Hierdurch ist das Reinigungswerkzeug vor Verschmutzungen sowie Beschädigungen während des Nichtgebrauchs geschützt und kann beispielsweise ohne weiteres im Reisegepäck transportiert werden.

Dadurch, daß das Reinigungswerkzeug in der Aufnahmehülse verschiebbar gelagert ist und von einer Aufbewahrungsposition, in der das Reinigungswerkzeug von der Aufnahmehülse im wesentlichen vollständig umfaßt ist, in eine Arbeitsposition verstellbar ist, in der der freie Endabschnitt aus der Aufnahmehülse herausragt, ist eine gute Handhabung des Reinigungswerkzeuges gewährleistet.

Während des Nichtgebrauchs ist das Reinigungswerkzeug geschützt in der Aufnahmehülse untergebracht und kann für den Gebrauch und auch zum Einfädeln in die Zahnzwischenräume einfach aus der Aufnahmehülse herausgeschoben werden.

Von Vorteil weist die Aufnahmehülse einen hohlzylindrischen Kupplungsabschnitt auf, an den sich eine Führungshülse anschließt, in welcher der Zwischenabschnitt und gegebenenfalls, je nach Position des Reinigungswerkzeuges, der Endabschnitt des Reinigungswerkzeuges geführt sind. Mit Hilfe der Führungshülse kann der Benutzer die Zahnzwischenräume einfach ertasten und nach richtiger Positionierung das Reinigungswerkzeug zum Gebrauch aus der Aufnahmehülse herausschieben, so daß dieses mit dem freien Endabschnitt in die Zahnzwischenräume zu deren Reinigung eindringen kann.

Von besonderem Vorteil ist die Maßnahme, daß der Innendurchmesser der Führungshülse für das Reinigungswerkzeug nur geringfügig größere Werte als der Durchmesser der balligen Verdickungen des Zwischenabschnitts aufweist. Die balligen Verdickungen, die von Vorteil gleichmäßig über die Schaftlänge verteilt sind, wirken als Lager in der Führungshülse und reduzieren dadurch die Gleitreibung, da lediglich eine Linienberührung zwischen den balligen Verdickungen und der Innenwand der Führungshülse vorliegt. Dies hat zur Folge, daß Torsionsspannungen im Schaft des Reinigungswerkzeuges während der Benutzung wesentlich reduziert und somit die Lebensdauer des aus dauerbiegewechselfestem Kunststoff bestehenden Reinigungswerkzeuges erhöht wird.

Nach einer Ausgestaltung der Erfindung weist die Führungshülse eine im wesentlichen kreisbogenförmige Umbiegung auf, wobei der Kreisbogen einen Winkelbereich zwischen 30 Grad und 150 Grad, bevorzugt 90 Grad + /- 20 Grad, überstreicht. Durch diese Maßnahme wird die Benutzung des Zahnreinigungsgerätes, insbesondere zum Ertasten der Zahnzwischenräume und zum Einführen des freien Endabschnittes und auch die nachfolgende Reinigung erleichtert.

Nach einer weiteren Ausgestaltung der Erfindung ist das Reinigungswerkzeug zusammen mit der Aufnahmehülse als nach Verschleiß ersetzbares Austauschteil verwendbar. Zum Austausch wird die Aufnahmehülse mit dem vollständig darin untergebrachten Reinigungswerkzeug einfach von dem Handgriff abgenommen und gegen ein neues Reinigungswerkzeug mit Aufnahmehülse ersetzt. Dadurch, daß das Reinigungswerkzeug vollständig von der Aufnahmehülse aufgenommen ist, kann der Benutzer während des Auswechselvorganges mit dem unter Umständen verschmutzten Reinigungswerkzeug nicht in Kontakt kommen.

Nach einer besonders vorteilhaften, eigenständigen Ausgestaltung der Erfindung ist das Reinigungswerkzeug mittels Rastmitteln in einer Transportposition in der Aufnahmehülse festgelegt und durch Kopplung mit dem Antrieb des Griffstücks von der Transportposition in die Aufbewahrungsposition oder gegebenenfalls Arbeitsposition überführbar. Dadurch, daß das Reinigungswerkzeug innerhalb der Aufnahmehülse in einer Transportstellung lösbar festlegbar ist, in der das Reinigungswerkzeug vollständig von der Aufnahmehülse umfaßt ist, wird eine Beschädigung des Reinigungswerkzeuges bis zu dessen erster Benutzung vermieden. Verpackungsmittel für das Austauschteil können daher unaufwendig gestaltet werden.

Von Vorteil ist das Reinigungswerkzeug mit einem elektromotorischen Antrieb eines Griffstückes koppelbar, wobei die Antriebswelle des Griffstückes drehfest mit dem Reinigungswerkzeug verbindbar und in Längsrichtung des Griffstückes verschiebbar gelagert ist. Somit kann das Reinigungswerkzeug durch einfaches Verschieben der Antriebswelle in Längsrichtung des Griffstückes von der Ruheposition in die Arbeitsposition überführt werden.

Dadurch, daß die Antriebswelle mit einem Schalter zum Ein- und Ausschalten des elektromotorischen Antriebs gekoppelt und im Ein-Zustand in eine vorgeschobene Position überführbar ist, bewirkt ein Verschieben des Schalters zum einen ein Einschalten des elektromotorischen Antriebs und zum anderen ein damit einhergehendes, selbsttätiges Überführen des Reinigungswerkzeuges von der Ruheposition in die Arbeitsposition. Diese Maßnahme hat den Vorteil, daß der Benutzer das Reinigungswerkzeug leicht in die Zahnzwischenräume einführen kann, wobei dieser Vorgang durch die rotierende, bzw. oszillierende Bewegung des Reinigungswerkzeuges noch weiter unterstützt wird. Zum Ausschalten wird der Schalter in die Aus-Stellung zurückgestellt, wobei der elektromotorische Antrieb abgeschaltet und das Reinigungswerkzeug gleichzeitig in die Aufnahmehülse zurückgeschoben wird.

Gemäß einer vorteilhaften Weiterbildung der Erfindung ist die Antriebswelle von Rückstellmitteln beaufschlagt, die bei fehlender Betätigung des Schalters selbsttätig den Antrieb in den Aus-Zustand und/oder die Antriebswelle in die hineingeschobene Position überführen. Hierdurch wird gewährleistet, daß das Zahnreinigungsgerät immer dann selbsttätig in den ausgeschalteten Zustand überführt wird, wenn der Benutzer den Schalter losläßt. Die Feder bewirkt dann ein sofortiges Ausschalten des elektromotorischen Antriebes und gleichzeitig ein Zurückschieben des Reinigungswerkzeuges in die Aufnahmehülse. Mögliche Verletzungen durch eine unsachgemäße Handhabung des Reinigungsgerätes werden dadurch weitestgehend vermieden. Darüber hinaus ist gewährleistet, daß das Reinigungswerkzeug sich nur während der eigentlichen Reinigungsphase außerhalb der Aufnahmehülse befindet, ansonsten jedoch aufgrund der Wirkung der Rückstellmittel geschützt innerhalb der Aufnahmehülse positioniert ist.

Weitere Merkmale, Vorteile und Anwendungsmöglichkeiten der Erfindung ergeben sich aus der nachfolgenden Beschreibung der Ausführungsbeispiele, die in der Zeichnung näher dargestellt sind.

Es zeigen:
- Fig. 1: eine teilweise geschnittene, schematische Darstellung eines Ausführungsbeispiels eines Zahnreinigungsgerätes mit dem erfindungsgemäßen Reinigungswerkzeug in einer Seitenansicht,
- Fig. 2, 3: zwei Ausführungsformen des erfindungsgemäßen Reinigungswerkzeuges,
- Fig. 4, 5: eine schematische Darstellung des Reinigungswerkzeuges nach der Erfindung mit der Aufnahmehülse, wobei sich der Reinigungswerkzeug in der Transport- bzw. Arbeitsstellung befindet,
- Fig. 6.: eine vergrößerte, perspektivische Darstellung des Schaftes des Reinigungswerkzeuges nach dem Ausführungsbeispiel der Fig. 2 und
- Fig. 7, 8: eine Schnittdarstellung der Ebenen VII und VIII des Reinigungsschaftes der Fig.

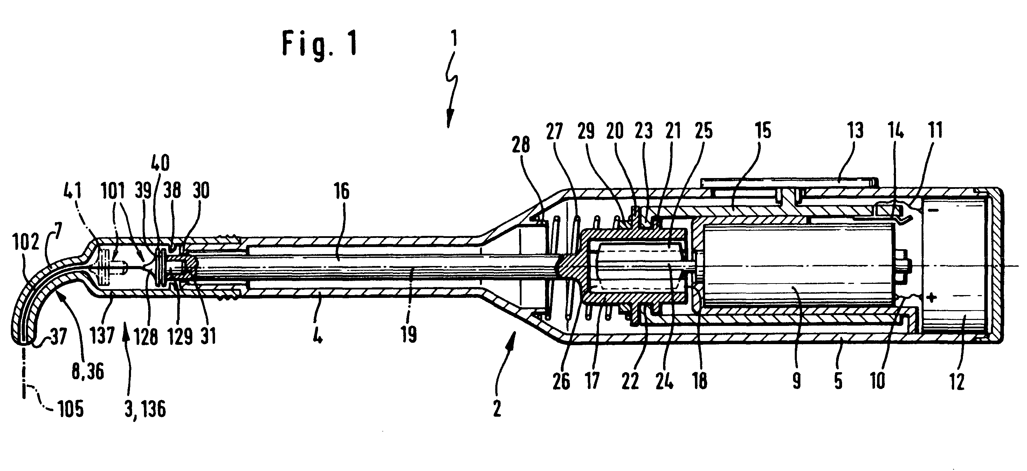

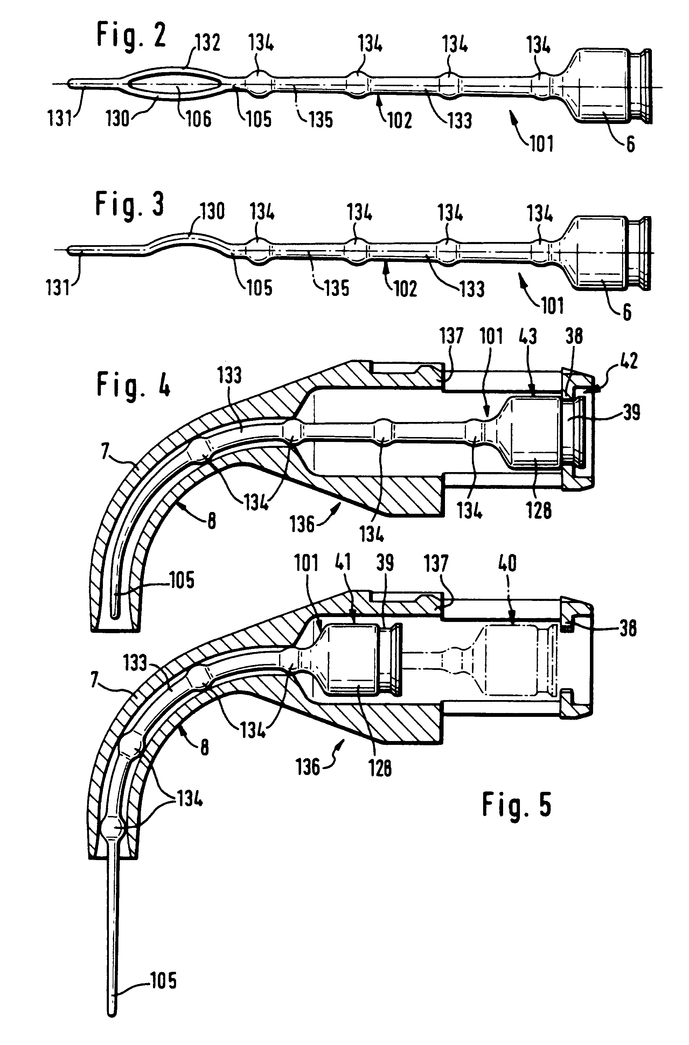

Auch wenn in den Fig 1, 4, 5 nicht erkennbar, ist davon auszugehen, daß der freie Erdabschnitt 105 nichtgerade sondern stets gemäß Fig 2,3 ausgebildet ist.

Das Zahnreinigungsgerät 1, bestehend aus einem Griffteil 2 und einem Aufsatzteil 3, ist in Fig. 1 dargestellt, Das Griffteil 2 ist länglich ausgebildet und weist einen im wesentlichen kreisförmigen Querschnitt auf. In einem, dem Aufsatzteil 3 zugewandten Zwischenstück 4 ist der Durchmesser des Griffteils 2 geringer als in einem von dem Aufsatzteil 3 abgewandten Handstück 5. Das Aufsatzteil 3 ist ebenfalls im wesentlichen länglich ausgebildet und weist einen im wesentlichen kreisförmigen Querschnitt auf. Der Durchmesser eines dem Griffteil 2 zugewandten Kupplungsabschnitts 137 des Aufsatzteils 3 entspricht dem Durchmesser des Zwischenstücks 4 des Griffteils 2. Eine dem Griffteil 2 abgewandte Führungshülse 7 des Aufsatzteils 3 besitzt einen kleineren Durchmesser und ist mit einer Umbiegung 8 versehen. In dem Handstück 5 des Griffteils 2 ist ein elektrisch angetriebener Motor 9, insbesondere ortsfest fixiert untergebracht, der über elektrische Leitungen 10, 11 mit einer Stromquelle 12, z. B. einem Akkumulator, verbunden ist. Ein in Längsrichtung verschiebbarer Schalter 13 ist in dem Handstück 5 angeordnet. An dem Schalter 13 ist ein elektrisch leitfähiger Kontakt 14 vorgesehen, der über die elektrische Leitung 11 mit der Stromquelle 12 verbunden ist. Des weiteren ist an dem Schalter 13 ein Kopplungsglied 15 angeordnet, weiches der Kopplung des Schalters 13 mit einer Antriebswelle 16 dient.

Die Antriebswelle 16 erstreckt sich durch das gesamte Zwischenstück 4 bis in das Handstück 5 und ist im Bereich des Griffteils 2 an dem, dem Motor 9 zugewandten freien Ende als topfförmige Aufnahme 17 mit einer Öffnung 18 ausgebildet. Der Motor 9, die Antriebswelle 16 und die topfförmige Aufnahme 17 sind konzentrisch zu einer gemeinsamen Achse 19 angeordnet, wobei die Öffnung 18 der topfförmigen Aufnahme 17 dem Motor 9 zugewandt ist. Von der Außenseite der topfförmigen Aufnahme 17 stehen in radialer Richtung zwei zueinander beabstandete Ringleisten 20, 21 nach außen ab, die eine Ringnut 22 bilden, in die eine von dem Kopplungsglied 15 nach innen gerichtete Ringleiste 23 eingreift. Hierdurch führt ein Verschieben des Schalters 13 in Längsrichtung nicht nur zum Ein-/Ausschalten des Gerätes, sondern auch zu einem Verschieben der topfförmigen Aufnahme 17 mitsamt der Antriebswelle 16 in Längsrichtung der Achse 19. Die Ringleiste 23 ist in Umfangsrichtung feststehend, während die topfförmige Aufnahme 17 mit der Ringnut 22 um die Ringleiste 23 rotieren kann.

Die topfförmige Aufnahme 17 kann somit unabhängig von der Stellung des Schalters 13 um die Achse 19 rotieren. Es versteht sich, daß im Bereich der Ringleiste 23 und der zugeordneten Ringnut 22 zusätzlich auch ein nicht dargestelltes Lager oder dergleichen vorgesehen sein kann, um die Reibung zu reduzieren.

Auf der der Öffnung 18 der topfförmigen Aufnahme 17 zugewandten Seite ragt eine Motorwelle 24 aus dem Motor 9, die wie der Motor 9 konzentrisch zur Achse 19 angeordnet ist. Die Motorwelle 24 ist mit wenigstens einem, vorzugsweise jedoch mit mehreren Flügeln 25 versehen, die radial nach außen abstehen. Die topfförmige Aufnahme 17 weist in ihrem Innenraum eine entsprechende Anzahl von Längsstegen 26 auf, die radial nach innen abstehen. Die Flügel 25 ragen durch die Öffnung 18 in den Innenraum der topfförmigen Aufnahme 17 und greifen zwischen die Längsstege 26 ein. Dabei überlappen sich die Flügel 25 und die Längsstege 26 auf einer axialen Länge, die größer ist als die maximale Länge, um die der Schalter 13 in Längsrichtung verschiebbar ist.

Über die Flügel 25 und die Längsstege 26 wird daher eine Rotation oder Oszillation der Motorwelle 24 auf die topfförmige Aufnahme 17 und die Antriebswelle 16 übertragen. Durch die Überlappung der Flügel 25 und der Längsstege 26 in Längsrichtung kann die Aufnahme 17 durch den Schalter 13 verschoben werden, ohne daß die Antriebsverbindung zwischen Motorwelle 24 und Antriebswelle 16 getrennt wird. Es versteht sich, daß diese konstruktive Durchführung der Kopplung auch auf eine andere Art, beispielsweise durch ein entsprechendes Getriebe oder dergleichen, durchgeführt werden kann. Zwischen der dem Zwischenstück 4 des Griffteils 2 zugewandten Seite der Ringleiste 20 und dem Übergangsbereich zwischen dem Handstück 5 und dem Zwischenstück 4 ist eine Feder 27 angeordnet, die mit Hilfe von Stützwänden 28, 29 in ihrer Position festgelegt ist. Die Feder 27 erzeugt eine Kraft, die gegen ein Verschieben des Schalters 13 in Richtung hin zum Aufsatzteil 3 gerichtet ist. Dies bewirkt, daß der Schalter 13 und damit die Antriebswelle 16 durch die Feder ohne äußere Krafteinwirkung immer selbsttätig in die vom Aufsatzteil 3 abgewandte Richtung, in eine Aufbewahrungsposition 40, gedrückt werden.

An dem dem Aufsatzteil 3 zugewandten Ende des Griffteils 2 ist die Antriebswelle 16 von einer nach innen vom Griffteil 2 abstehenden Ringleiste 30 geführt. Die Antriebswelle 16 ragt geringfügig aus dem Zwischenstück 4 heraus und ist an ihrem freien Ende mit einer Bohrung 31 versehen, die im wesentlichen konzentrisch zur Achse 19 angeordnet ist.

In dem auf das Griffteil 2 aufgesteckten Aufsatzteil 3 ist ein Reinigungswerkzeug 101, in Längsrichtung verschiebbar, untergebracht. Das Reinigungswerkzeug 101 weist einen Reinigungsschaft 102 auf, der länglich und dünn ausgestaltet ist. Vorzugsweise ist der Reinigungsschaft 102 etwa 30 mm lang und besitzt einen Durchmesser von etwa 0.3 mm bis 0,5 mm. Hergestellt ist der Reinigungsschaft 102 aus einem Kunststoff, insbesondere einem Polyesterelastomer, z. B. Hytrel. Der Reinigungsschaft 102 ist flexibel und erlaubt auch bei einer Rotation um seine Längsachse eine Umbiegung um einen Winkel bis zu 150 Grad und mehr.

An dem der Antriebswelle 16 zugewandten Ende weist das Reinigungswerkzeug 101 einen kreisförmigen Sockel 128 auf, der mit dem Reinigungsschaft 102 verbunden ist. Ein Zapfen 129 ist mit dem Sockel 128 verbunden. Der Zapfen 129 ist der Bohrung 31 der Antriebswelle 16 zugeordnet. Der Zapfen 129 und die Bohrung 31 können einen Preßsitz bilden oder in ihrer Querschnittsform aneinander angepaßt sein und beispielsweise die Form eines Mehrecks oder dergleichen aufweisen. Der Zapfen 129 ist drehfest in die Bohrung 31 eingesteckt, wobei der Reinigungsschaft 102 sich von dem Sockel 128 hin zu der Führungshülse 7 erstreckt und durch diese hindurchgesteckt ist.

Aufgrund der Umbiegung 8 der Führungshülse 7 weist auch der in der Führungshülse 7 aufgenommene Reinigungsschaft 102 eine entsprechende Umbiegung 36 auf. Die Umbiegung kann Werte bis zu 150 Grad und mehr annehmen, bevorzugt ist ein Winkel von 90 Grad +/- 20 Grad vorgesehen. Das freie Ende der Führungshülse 7 ist mit einer im wesentlichen halbkugelförmigen Verrundung 37 versehen, wobei der Durchmesser einen Wert im Bereich von etwa 1 mm bis 4 mm, insbesondere 2,5 mm, annimmt. Das dargestellte Zahnreinigungsgerät 1 ist in einen ausgeschalteten Zustand mit einer Aufbewahrungsposition 40 des Reinigungswerkzeuges 1 und in einen eingeschalteten Zustand mit einer Arbeitsposition 41 des Reinigungswerkzeuges 101 versetzbar. In Fig. 1 sind die beiden Positionen 40, 41 durchgezogen bzw. gestrichelt gemeinsam dargestellt. Die Antriebswelle 16 sowie das übrige Zahnreinigungsgerät sind jedoch einheitlich in der Aufbewahrungsposition 40 dargestellt.

Die Fig. 4 zeigt das Reinigungswerkzeug 101 und die zugehörige Aufnahmehülse 136 vergrößert. Dabei ist die Aufbewahrungsposition 40 des Reinigungswerkzeuges 101 gestrichelt und die Arbeitsposition 41 durchgezogen dargestellt. In der Aufbewahrungsposition 40 ist das Reinigungswerkzeug 101 und insbesondere der Reinigungsschaft 102 vollständig innerhalb der Aufnahmehülse 136, bzw. des Aufsatzteils 3 angeordnet. Der Sockel 128 und der Zapfen 129 befinden sich in der unmittelbaren Nähe des dem Aufsatzteil 3 zugewandten Endes des Griffteils 2. Im Unterschied dazu ist in der Arbeitsposition 41 das Reinigungswerkzeug 101 nicht vollständig von der Aufnahmehülse 136 aufgenommen. Der Endabschnitt 105 des Reinigungsschaftes 102 ragt aus dem freien Ende der Führungshülse 7 heraus. Vorzugsweise beträgt die Länge des Endab schnitts 105 etwa 10 mm bis etwa 15 mm, insbesondere 12 mm.

Befindet sich der Schalter 13 in der Aus-Stellung, weist der Kontakt 14 keine Verbindung mit dem Anschlußkontakt des Motors 9 auf. Die Motorwelle 24 sowie die Antriebswelle 16 und das Reinigungswerkzeug 101 rotieren bzw. oszillieren dann nicht. Auch die Antriebswelle 16 befindet sich in der in Fig. 1 dargestellten zurückgeschobenen Position aufgrund der von der Feder 27 ausgeübten Kraft. Dies hat zur Folge, daß auch das Reinigungswerkzeug 101 sich in der Aufbewahrungsposition 40 befindet und vollständig von dem Aufsatzteil 3 umfaßt ist. Verschiebt der Benutzer den Schalter 13 in Längsrichtung hin zum Aufsatzteil 3, so wird der Motor 9 über den Kontakt 14 eingeschaltet und die Motorwelle 24 in Rotation oder Oszillation um die Achse 19 versetzt. Durch die Flügel 25 und die Längsstege 26 wird diese Rotation auf die Antriebswelle 16 sowie auf das angekoppelte Reinigungswerkzeug 101 übertragen. Der die Umbiegung 36 aufweisende Reinigungsschaft 102 wird hierdurch in eine Rotation bzw. Oszillation um seine Mittellängsachse versetzt. Gleichzeitig mit dem Verschieben des Schalters 13 in Ein-Stellung, wird die Antriebswelle 16 über die Ringleiste 23 und die Ringnut 22 in Richtung der Achse 19 nach außen verschoben. Diese Bewegung wird an das mit der Antriebswelle 16 gekoppelte Reinigungswerkzeug 101 weitergeleitet, so daß dieses mit dem Einschalten des Reinigungsgerätes 1 in die Arbeitsposition 41 bewegt wird. Dann ragt das Reinigungswerkzeug mit dem Endabschnitt 105 aus der Führungshülse 7 heraus und kann zur Reinigung der Zahnoberflächen eingesetzt werden. Von Vorteil wird die Führungshülse 7 bei ausgeschaltetem Zahnreinigungsgerät zunächst an den zu reinigenden Zahnzwischenräumen positioniert und erst dann der Schalter 13 in die Ein-Stellung bewegt. Hierdurch wird ein Einführen des Endabschnitts 105 des Reinigungswerkzeuges 101 erheblich erleichtert. Wird Schalter 13 vom Benutzer wieder losgelassen, so überführt die Feder 27 Schalter 13 in die Aus-Stellung. Dies bewirkt, daß auch das Reinigungswerkzeug 101 sich selbsttätig wieder zurück in die Aufbewahrungsposition 40 begibt. Auch berührt dann der Kontakt 14 nicht mehr den Motor 19, so daß dieser ausgeschaltet ist.

In Fig. 4 ist das Aufsatzteil 3 bzw. die Aufnahmehülse 136 zusammen mit dem Reinigungswerkzeug 101 in einer Transportposition 43 dargestellt. Hierzu weist die Aufnahmehülse 136 etwa mittig in dem Kupplungsabschnitt 137 eine nach innen abstehende Ringleiste 38 auf. Der Sockel 128 des Reinigungswerkzeuges 101 ist mit einer der Ringleiste 38 angepaßten Ringnut 39 versehen. In der dargestellten Transportstellung 43 ist die Ringleiste 38 in der Ringnut 39 eingerastet und das Reinigungswerkzeug 101 in der Aufnahmehülse 136 lösbar festgelegt. In dieser Transportposition 43 ist das Aufsatzteil 3 bzw. die Aufnahmehülse 136 als ersetzbares Austauschteil, z. B. von einer Blisterpackung umschlossen, im Handel erhältlich und kann von dem Kunden zum Ersatz verschlissener Reinigungswerkzeuge 101 erworben werden. Dabei ist das Reinigungswerkzeug 101 sicher und geschützt in dem Aufsatzteil 3 untergebracht. Steckt man das Aufsatzteil 3 mit dem eingerasteten Reinigungswerkzeug 101 auf das Griffteil 2 auf, so wird der Zapfen 129 in der Bohrung 31 eingeführt. Kurz bevor das Aufsatzteil 3 vollständig auf das Griffteil aufgesteckt ist, wird die Ringleiste 38 aus der Ringnut 39 herausgedrückt, so daß nunmehr das Reinigungswerkzeug 101 nicht mehr im Aufsatzteil 3 festgelegt, sondern verschiebbar in diesem angeordnet ist.

Fig. 2 zeigt ein erstes Ausführungsbeispiel eines Reinigungswerkzeuges 101, bei dem der Reinigungsschaft 102 an einem Halteabschnitt 6 gehalten ist. Der Reinigungsschaft 102 weist anschließend an den Halteabschnitt 6 einen Zwischenabschnitt 133 mit mehreren, insbesondere gleichmäßig verteilten Verdickungen 134 auf. An den Zwischenabschnitt 133 schließt sich ein Endabschnitt 105 an. Dieser Endabschnitt 105 besitzt zwei benachbarte Durchbiegungen 130, 132, die eine Öse 106 bilden. An die Durchbiegungen 130, 132 schließt sich ein Einführungsabschnitt 131 an. Mit Ausnahme der Umbiegungen 130, 132 ist das Reinigungswerkzeug 101 im wesentlichen rotationssymmetrisch zu einer Schaftmittellängsachse 135 ausgebildet. Das Reinigungswerkzeug 101 besteht aus einem flexiblen Kunststoff, z. B. Hytrel, der in der Lage ist, der hohen Biegebeanspruchung bei dauernd wechselnder Richtung ohne Materialermüdungserscheinungen standzuhalten.

Im Gegensatz hierzu ist in Fig. 3 ein Reinigungswerkzeug 101 dargestellt, welches lediglich eine einzige Umbiegung 130 aufweist, die praktisch eine "halbe" Öse 106 bildet. Durch eine Oszillation bzw. Rotation des Reinigungswerkzeuges 101 um seine Schaftmittellängsachse 135 wird die Öse des Ausführungsbeispiels der Fig. 2 sozusagen dynamisch komplettiert. Das Reinigungswerkzeug 101 nach dem Ausführungsbeispiel der Fig. 3 weist den Vorteil einer einfacheren Herstellung auf. Dies wird insbesondere dann verständlich, wenn man berücksichtigt, daß die Dicke des Reinigungswerkzeuges 101 im Bereich des freien Endabschnittes in der Größenordnung von etwa 0,3 mm liegt, wobei die Durchbiegung 130, 132 einen Wert von etwa 0,5 mm + /- 0,2 mm aufweist.

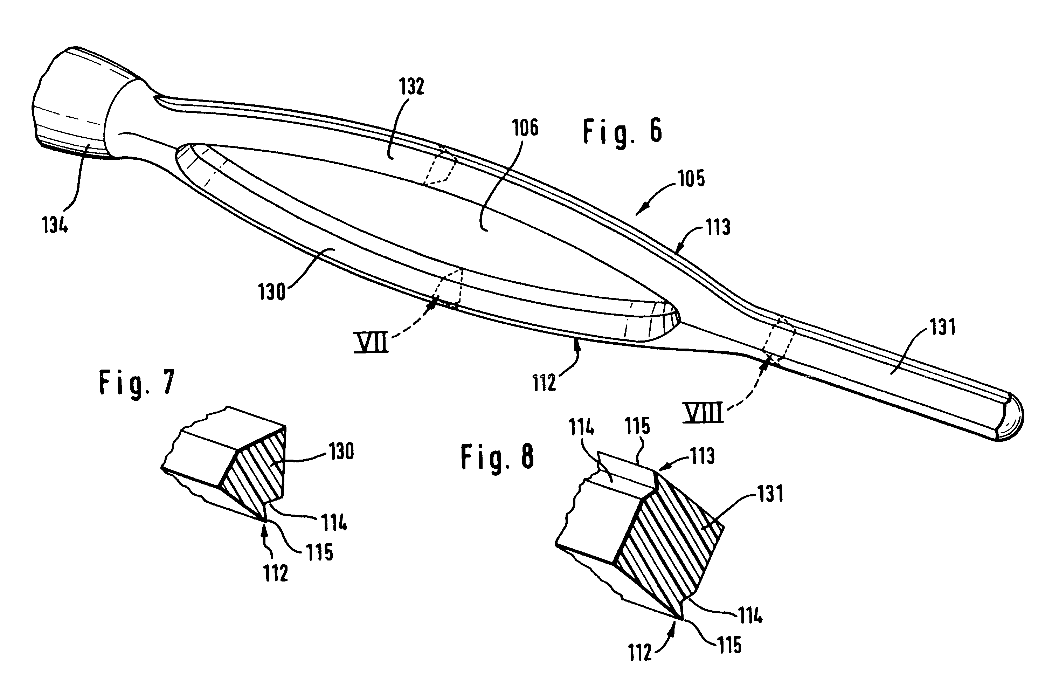

In Fig. 6 ist der Endabschnitt 105 eines Reinigungswerkzeuges 101 nach Fig. 2 vergrößert dargestellt. Über die gesamte Länge der Reinigungsöse 106 und insbesondere über den Einführungsabschnitt 131 verlaufen zwei Reinigungskanten 112, 113. Gemäß den Fig. 7, 8 werden die Reinigungskanten 112, 113 durch Einschnitte 114 gebildet, so daß jeweils schneidenförmige Stege 115 entstehen. Die Einschnitte 114 sind dabei derart angeordnet, daß die Stege 115 in ein und dieselbe Rotationsrichtung weisen. Die Durchbiegungen 130, 132 weisen ein im wesentlichen dreieckförmiges Profil auf, während der Einführungsabschnitt 131 in etwa quadratisches Profil besitzt.

Wie insbesondere aus Fig. 5 zu entnehmen ist, dienen die balligen Verdickungen 134 an dem Zwischenabschnitt 133 des Reinigungswerkzeuges 101 als Lager zu Reduzierung der Gleitreibung in der Führungshülse 7, da lediglich eine Linienberührung zwischen dem Reinigungswerkzeug 101 und der Führungshülse 7 zustandekommt.

## Patentansprüche

1. Reinigungswerkzeug (101) für Zähne, mit einem dünnen, länglichen Schaft (102), der einen freien, zum Einführen in die Zahnzwischenräume geeigneten Endabschnitt (105) aufweist, welcher mit einem Halteabschnitt (6) verbunden ist, in Kombination mit einem Griffstück (2), wobei der Halteabschnitt (6) mit einem elektromotorischen Antrieb des Griffstücks (2) koppelbar ist, und das gekoppelte Reiningungswerkzeug (101) in Rotation bzw. Oszillation um eine Schaftmittellängsachse (135) versetzt wird, wobei der freie Endabschnitt (105) des Schaftes (102) aus flexiblem Material besteht, **dadurch gekennzeichnet, daß** der freie Endabschnitt (105) eine etwa sichelartige Durchbiegung (130) aufweist.

2. Reinigungswerkzeug nach Anspruch 1, **dadurch gekennzeichnet, daß** sich kopfseitig an die Durchbiegung (130) des Endabschnittes ein im wesentlichen gerader Einführungsabschnitt (131) anschließt.

3. Reinigungswerkzeug nach Anspruch 1 oder 2, **dadurch gekennzeichnet, daß** die Länge der Durchbiegung (130) zur Länge des Endabschnittes (105) im Verhältnis von etwa 1:2 steht.

4. Reinigungswerkzeug nach einem der vorhergehenden Ansprüche, **dadurch gekennzeichnet, daß** der freie Endabschnitt (105) zwei benachbarte, eine Öse (106) bildende Durchbiegungen (130, 132) aufweist.

5. Reinigungswerkzeug nach einem der vorhergehenden Ansprüche, **dadurch gekennzeichnet, daß** der freie Endabschnitt (105) aus polyesterhaltigem Kunststoff, insbesondere Hytrel, besteht.

6. Reinigungswerkzeug nach einem der vorhergehenden Ansprüche, **dadurch gekennzeichnet, daß** zwischen dem Endabschnitt (105) und dem Halteabschnitt (6) ein Zwischenabschnitt (133) mit einer oder mehreren balligen Verdickungen (134) angeordnet ist.

7. Reinigungswerkzeug nach einem der vorhergehenden Ansprüche, **dadurch gekennzeichnet, daß** der freie Endabschnitt (105) wenigstens eine, im wesentlichen parallel zur Schaftmittellängsachse (135) verlaufende schneidenförmige Reinigungskante (112, 113) aufweist.

8. Reinigungswerkzeug nach einem der vorhergehenden Ansprüche, **dadurch gekennzeichnet, daß** der freie Endabschnitt (105) eine Länge von etwa 5 mm, eine Dicke von etwa 0,3 mm und eine Durchbiegung (130, 132) von etwa 0,5 mm bzw. eine Öse (106) mit einer lichten Weite von etwa 1 mm aufweist.

9. Reinigungswerkzeug nach einem der vorhergehenden Ansprüche, **dadurch gekennzeichnet, daß** das Reinigungswerkzeug (101) von einer Aufnahmehülse (136) umfaßt ist.

10. Reinigungswerkzeug nach Anspruch 9, **dadurch gekennzeichnet, daß** das Reinigungswerkzeug (101) in der Aufnahmehülse (136) verschiebbar gelagert ist und von einer Aufbewahrungsposition (40), in der das Reinigungswerkzeug (101) von der Aufnahmehülse (136) im wesentlichen vollständig umfaßt ist, in eine Arbeitsposition (41) verstellbar ist, in der der freie Endabschnitt (105) aus der Aufnahmehülse (136) herausragt.

11. Reinigungswerkzeug nach Anspruch 9 oder 10, **dadurch gekennzeichnet, daß** die Aufnahmehülse (136) einen hohlzylindrischen Kupplungsabschnitt (137) aufweist, an den sich eine Führungshülse (7) anschließt, in welcher der Zwischenabschnitt (133) und gegebenenfalls, je nach Position des Reinigungswerkzeuges (101), der Endabschnitt (105) des Reinigungswerkzeuges (101) geführt sind.

12. Reinigungswerkzeug nach Anspruch 11 **dadurch gekennzeichnet, daß** der Innendurchmesser einer Führungshülse (7) für das Reinigungswerkzeug (101) geringfügig größere Werte als der Durchmesser der balligen Verdickung (134) des Zwischenabschnitts (133) aufweist.

13. Reinigungswerkzeug nach einem der Ansprüche 11 bis 12, **dadurch gekennzeichnet, daß** die Führungshülse (7) eine im wesentlichen kreisbogenförmige Umbiegung (8) aufweist und der Kreisbogen einen Winkelbereich zwischen 30 Grad und 150 Grad, bevorzugt 90 Grad + /- 20 Grad, überstreicht.

14. Reinigungswerkzeug nach einem der Ansprüche 9-13, **gekennzeichnet durch** die Verwendung als zusammen mit der Aufnahmehülse (136) nach Verschleiß ersetzbares Austauschteil.

15. Reinigungswerkzeug nach einem der Ansprüche 9 bis 14, **dadurch gekennzeichnet, daß** das Reinigungswerkzeug (101) mittels Rastmitteln (42) in einer Transportposition (43) in der Aufnahmehülse (136) festgelegt ist und durch Kopplung mit dem Antrieb des Griffstücks (2) von der Transportposition (43) in die Aufbewahrungsposition (40) oder gegebenenfalls Arbeitsposition (41) überführbar ist.

16. Reinigungswerkzeug nach einem der vorhergehenden Ansprüche, **gekennzeichnet durch** die Kopplung mit einem elektromotorischen Antrieb eines Griffstückes (2), wobei die Antriebswelle (16) des Griffstückes (2) drehfest mit dem Reinigungswerkzeug (101) verbindbar und in Längsrichtung des Griffstückes (2) verschiebbar gelagert ist.

17. Reinigungswerkzeug nach Anspruch 16, **dadurch gekennzeichnet, daß** die Antriebswelle (16) mit einem Schalter (13) zum Ein- und Ausschalten des elektromotorischen Antriebs gekoppelt und im Ein-Zustand in eine vorgeschobene Position überführbar ist.

18. Reinigungswerkzeug nach Anspruch 17, **dadurch gekennzeichnet, daß** die Antriebswelle (16) von Rückstellmitteln beaufschlagt ist, die bei fehlender Betätigung des Schalters (13) selbsttätig den Antrieb in den Aus-Zustand und/oder die Antriebswelle (16) in die hineingeschobene Position, insbesondere Aufbewahrungsposition (40), überführen.

## Claims

1. A dental cleansing implement (101) having a thin, elongate shaft (102) comprising a free end portion (105) suitable for insertion in the interproximal spaces and connected with a mounting portion (6) in combination with a handle member (2), said mounting portion (6) being adapted to be coupled to an electric motor drive mechanism of said handle member (2), and said coupled cleansing implement (101) being set in rotation or oscillation about a shaft longitudinal center line (135), with the free end portion (105) of the shaft (102) being made of a flexible material, **characterized in that** the free end portion (105) is bent in an approximately crescent-type configuration (130).

2. A cleansing implement as claimed in claim 1, **characterized in that** at the head end a substantially straight leading portion (131) adjoins the bent portion (130) of the end portion.

3. A cleansing implement as claimed in claim 1 or 2, **characterized in that** the ratio of the length of the bent portion (130) to the length of the end portion (105) is about 1 to 2.

4. A cleansing implement as claimed in any one of the preceding claims, **characterized in that** the free end portion (105) includes two adjacent bent portions (130, 132) providing an eyelet (106).

5. A cleansing implement as claimed in any one of the preceding claims, **characterized in that** the free end portion (105) is made of a plastics material containing polyester, in particular hytrel.

6. A cleansing implement as claimed in any one of the preceding claims, **characterized in that** an intermediate portion (133) having one or several spherical enlargements (134) is arranged between the end portion (105) and the mounting portion (6).

7. A cleansing implement as claimed in any one of the preceding claims, **characterized in that** the free end portion (105) includes at least one blade-shaped cleansing edge (112, 113) extending substantially parallel to the shaft longitudinal center line (135).

8. A cleansing implement as claimed in any one of the preceding claims, **characterized in that** the free end portion (105) has a length of about 5 mm, a thickness of about 0.3 mm, and a bent portion (130, 132) of about 0.5 mm or an eyelet (106) with an inside width of about 1 mm.

9. A cleansing implement as claimed in any one of the preceding claims, **characterized in that** the cleansing implement (101) is encompassed by a receiving sleeve (136).

10. A cleansing implement as claimed in claim 9, **characterized in that** the cleansing implement (101) is slidably carried in the receiving sleeve (136) and is movable from a storage position (40), in which the cleansing implement (101) is substantially totally encompassed by the receiving sleeve (136), into an operating position (41 ) in which the free end portion (105) protrudes from the receiving sleeve (136).

11. A cleansing implement as claimed in claim 9 or 10, **characterized in that** the receiving sleeve (136) includes a hollow cylindrical coupling portion (137) having an adjoining guide sleeve (7) in which the intermediate portion (133) and, depending on the position of the cleansing implement (101), also the end portion (105) of the cleansing implement (101) are guided.

12. A cleansing implement as claimed in claim 11, **characterized in that** the inside diameter of the guide sleeve (7) for the cleansing implement (101) is only slightly greater than the diameter of the spherical enlargement (134) of the intermediate portion (133).

13. A cleansing implement as claimed in any one of the claims 11 to 12, **characterized in that** the guide sleeve (7) includes a substantially circular-arc-shaped bent portion (8), and that the circular arc covers an angular range of between 30 degrees and 150 degrees, preferably 90 degrees ± 20 degrees.

14. A cleansing implement as claimed in any one of the claims 9 to 13, **characterized by** its use as a replacement part together with the receiving sleeve (136), substituting a worn part.

15. A cleansing implement as claimed in any one of the claims 9 to 14, **characterized in that** the cleansing implement (101) is located in the receiving sleeve (136) in a transit position (43) by means of detent elements (42), and is movable from the transit position (43) into the storage position (40) or, where applicable, the operating position (41) by coupling engagement with the drive mechanism of the handle member (2).

16. A cleansing implement as claimed in any one of the preceding claims, **characterized by** its coupling engagement with an electric motor drive mechanism of a handle member (2), with the drive shaft (16) of the handle member (2) being adapted to be connected with the cleansing implement (101) in a nonrotating relationship and being slidably mounted in the longitudinal direction of the handle member (2).

17. A cleansing implement as claimed in claim 16, **characterized in that** the drive shaft (16) is coupled to a switch (13) to energize and deenergize the electric motor drive mechanism, and is movable into an advanced position in the On-condition.

18. A cleansing implement as claimed in claim 17, **characterized in that** the drive shaft (16) is acted upon by restoring elements which, in the absence of actuation of the switch (13), automatically return the drive mechanism to the Off-condition and/or cause the drive shaft (16) to occupy the retracted position, in particular the storage position (40).

## Revendications

1. instrument de nettoyage (101) pour des dents, comportant une tige (102) mince, allongée, présentant un tronçon d'extrémité (105) libre qui est approprié pour l'introduction dans les espaces entre des dents et qui est relié à un tronçon de retenue (6), en combinaison avec un élément de préhension (2), dans lequel le tronçon de retenue (6) peut être accouplé à un entraînement par moteur électrique de l'élément de préhension (2), et dans lequel l'instrument de nettoyage (101) accouplé est mis en rotation et/ou oscillation autour d'un axe longitudinal médian de tige (135), dans lequel le tronçon d'extrémité libre (105) de la tige (102) est constitué d'une matière flexible, ***caractérisé en ce que*** le tronçon d'extrémité libre (105) présente une courbure (130) approximativement en forme de croissant.

2. Instrument de nettoyage suivant la revendication 1, **caractérisé en ce qu'**un tronçon d'introduction (131) sensiblement droit se raccorde du côté de la tête à la courbure (130) du tronçon d'extrémité.

3. instrument de nettoyage suivant la revendication 1 ou 2, **caractérisé en ce que** la longueur de la courbure (130) par rapport à la longueur du tronçon d'extrémité (105) est dans un rapport d'approximativement 1/2.

4. instrument de nettoyage suivant l'une des revendications précédentes, **caractérisé en ce que** le tronçon d'extrémité libre (105) présente deux courbures (130, 132) voisines formant un oeillet (106).

5. Instrument de nettoyage suivant l'une des revendications précédentes, **caractérisé en ce que** le tronçon d'extrémité libre (105) est constitué d'une matière synthétique comprenant du polyester, en particulier de l'Hytrel.

6. instrument de nettoyage suivant l'une des revendications précédentes, **caractérisé en ce qu'**un tronçon intermédiaire (133) comportant un ou plusieurs épaississements bombés (134) est agencé entre le tronçon d'extrémité (105) et le tronçon de retenue (6).

7. Instrument de nettoyage suivant l'une des revendications précédentes, **caractérisé en ce que** le tronçon d'extrémité libre (105) présente au moins une arête de nettoyage (112, 113) en forme de tranchant et s'étendant sensiblement parallèlement à l'axe longitudinal médian (135) de la tige.

8. Instrument de nettoyage suivant l'une des revendications précédentes, **caractérisé en ce que** le tronçon d'extrémité libre (105) présente une longueur d'approximativement 5 mm, une épaisseur d'approximativement 0,3 mm et une courbure (130, 132) d'approximativement 0,5 mm ou bien un oeillet (106) présentant un passage interne d'approximativement 1 mm.

9. Instrument de nettoyage suivant l'une des revendications précédentes, **caractérisé en ce que** l'instrument de nettoyage (101) est entouré par une douille de logement (136).

10. Instrument de nettoyage suivant la revendication 9, **caractérisé en ce que** l'instrument de nettoyage (101) est monté de façon mobile dans la douille de logement (136) et peut être déplacé depuis une position de stockage (40), dans laquelle l'instrument de nettoyage (101) est sensiblement complètement entouré par la douille de logement (136), dans une position de travail (41) dans laquelle le tronçon d'extrémité libre (105) fait saillie de la douille de logement (136).

11. instrument de nettoyage suivant la revendication 9 ou 10, **caractérisé en ce que** la douille de logement (136) présente un tronçon d'accouplement cylindrique creux (137) auquel se raccorde une douille de guidage (7) dans laquelle le tronçon intermédiaire (133) et le cas échéant, selon un positionnement de l'instrument de nettoyage (101), le tronçon d'extrémité (105) de l'instrument de nettoyage (101) sont guidés.

12. Instrument de nettoyage suivant la revendication 11, **caractérisé en ce que** le diamètre interne d'une douille de guidage (7) pour l'instrument de nettoyage (101) présente une valeur faiblement supérieure au diamètre de l'épaississement bombé (134) du tronçon intermédiaire (133).

13. instrument de nettoyage suivant l'une des revendications 11 et 12, **caractérisé en ce que** la douille de guidage (7) présente un cintrage (8) sensiblement en arc de cercle et **en ce que** l'arc de cercle a une plage angulaire entre 30° et 150°, de préférence de 90° à +/- 20°.

14. Instrument de nettoyage suivant l'une des revendications 9 à 13, **caractérisé par** l'utilisation sous la forme d'un élément de rechange remplaçable avec la douille de logement (136) après usure.

15. instrument de nettoyage suivant l'une des revendications 9 à 14, **caractérisé en ce que** l'instrument de nettoyage (101) est fixé par des moyens de blocage (42), dans une position de transport (43), dans la douille de logement (136) et peut être amené, par un accouplement à l'entraînement de l'élément de préhension (2), depuis la position de transport (43) dans la position de stockage (40) ou, le cas échéant, dans la position de travail (41).

16. instrument de nettoyage suivant l'une des revendications précédentes, **caractérisé par** l'accouplement à un entraînement, par moteur électrique, d'un élément de préhension (2), l'arbre d'entraînement (16) de l'élément de préhension (2) pouvant être raccordé de manière fixe en rotation à l'instrument de nettoyage (101) et étant monté de façon mobile dans la direction longitudinale de l'élément de préhension (2).

17. Instrument de nettoyage suivant la revendication 16, **caractérisé en ce que** l'arbre d'entraînement (16) est accouplé à un commutateur (13), pour la mise en marche et à l'arrêt de l'entraînement par moteur électrique, et peut être amené, à l'état de marche, dans une position avancée.

18. instrument de nettoyage suivant la revendication 17, **caractérisé en ce que** l'arbre d'entraînement (16) est sollicité par des moyens de rappel qui, dans le cas d'une absence d'actionnement du commutateur (13), amènent automatiquement l'entraînement à l'état à l'arrêt, et/ou l'arbre d'entraînement (16) dans la position rentrée, en particulier dans la position de stockage (40).
